# EUROPEAN PATENT APPLICATION

(11) **EP 3 647 670 A1**
(43) Date of publication of application: **06.05.2020**
(21) Application number: 19206509.2
(22) Date of filing: 31.10.2019
(51) Int. Cl.: F24F 3/16, F24F 11/50, F24F 11/57, F24F 11/58, F24F 110/74, F24F 110/66, F24F 110/64, F24F 110/20

(54) **MODULAR CLIMATE UNIT AND METHOD FOR FILTERING A FLOW**

(30) Priority: 31.10.2018 NL 2021907
(71) Applicant: PlasmaMade B.V., 7951 SK Staphorst (NL)
(72) Inventor: VAN DER SLUIS, Martin Johan, 7951 PM Staphorst (NL)
(74) Representative: Rijsdijk, Vincent

(57) **Abstract**

The invention relates to a modular climate unit, a building comprising the modular climate unit and method for filtering a flow, preferably an air flow, comprising:
- a filter housing, comprising:
- a suction opening configured to accommodate an indrawn flow of ambient air for ventilation of a structure for accommodation; and
- an outlet opening for outlet of a filtered flow to the structure for accommodation,
wherein the filter housing comprises a flow path from the suction opening to the outlet opening for the indrawn flow, wherein the filter housing comprises at least two filter locations holding one or more filter modules; and
- at least one filter is chosen from the group of: a carbon filter, an ozone scrubber, a particle filter.

## Description

The present invention relates to a climate unit for filtering an ozone comprising flow, more specifically for filtering an air flow with the flow optionally comprising an amount of ozone. Such filter systems can be used in houses, office buildings, laboratories, hospitals for filtering indrawn air, for example.

Known climate units use a fan to draw in air through an inlet opening or suction opening. The air is forced through one or more filters. The air is discharged to the environment or is recirculated. The known climate units do not prevent accumulation of undesired compounds, for example ozone, within the space the climate unit is operated in. Furthermore, problem is the high concentration of harmful compounds, for example ozone and/or pollutants, that may occur in outside air, for example due to traffic and traffic jams, urban areas, industry, etcetera.

The present invention has for its object to obviate or at least reduce one or more of the aforementioned problems and to provide an effective and efficient modular climate unit enabling an efficient air control, for example ozone control, and resulting in a healthy environment.

This object is achieved with the modular climate unit for filtering a flow, preferably an air flow, according to the invention. The modular climate unit comprising:
- a filter housing, comprising:
   - a suction opening configured to accommodate an indrawn flow of ambient air for ventilation of a structure for accommodation; and
   - an outlet opening for outlet of a filtered flow to the structure for accommodation,
   wherein the filter housing comprises a flow path from the suction opening to the outlet opening for the indrawn flow, wherein the filter housing comprises at least two filter locations holding one or more filter modules; and
- at least one filter is chosen from the group of: a carbon filter, an ozone scrubber, a particle filter.

Structure for accommodations are for example, but not limited to: farms, factories, offices, houses, rooms, trains, cars, busses, airplanes, ships, warehouses, laboratories, nuclear power plant. The structure for accommodation can be used to house and/or transport people and/or animals. In a specific embodiment the climate unit is used to control ozone concentrations in a kitchen of kitchen facility.

The modular climate unit according to the invention comprises a filter housing with an inlet opening and/or a suction opening configured to accommodate an indrawn flow of ambient air for ventilation of the structure for accommodation.

In the housing of the modular climate unit there is provided at least two filter locations holding one or more filter modules. The filter locations are preferably closely assembled to each other. In addition, it is noted that each filter location preferably is configured to hold only a single filter that is provided as a filer module that can easily be inserted and/or removed from the modular climate unit housing.

In the housing of the modular climate unit there is provided at least one filter and preferably more than one filter such as two, three, four, five or another amount of filters. For example, the housing is configured with a carbon filter and/or an ozone scrubber and/or one or more further filters for undesired particles. The ozone scrubber is preferably provided close to the inlet or directly in the inlet of the filter housing. Such filter is preferably easy to dismount from the housing to enable cleaning and/or change of the filter.

Providing the structure for accommodation with the modular climate unit has the effect that purified air can be supplied to the structure for accommodation. The advantage is that humans and/or animals inside the structure for accommodation will breath healthier air. In conventional systems build up of ozone can occur due to the fact air from the outside is not filtered or air withdrawn from the inside environment is not filtered. The disclosed modular climate unit according to the present invention will prevent such build up of harmful compounds, for example ozone.

The modular climate unit according to the invention uses a voltage of 5 kV. It will be understood other voltages are also possible, for example 8 kV.

In a preferred embodiment the filter housing comprises at least one ozone scrubber, wherein the ozone scrubber is provided in the flow path and is configured for filtering ozone from the indrawn flow for ventilation of the structure for accommodation with a controlled ozone level.

Providing the ozone scrubber within the modular climate unit enables an effective reduction of the ozone level to below 50 parts per billion (bbp). This will reduce the accumulation of ozone in the structure for accommodation. The advantage of the ozone scrubber is that a controlled environment towards ozone can be achieved.

In a presently preferred embodiment the controlled ozone level will be analysed with an ozone sensor at the outlet of the modular climate unit. Therefore, the structure for accommodation will be provided with air containing a known ozone level. This enables a monitoring and control of the ozone level in the structure for accommodation, such as a kitchen.

In a preferred embodiment of the modular climate unit, the modular climate unit further comprising:
- a sensor capable of generating a signal, wherein the sensor is configured for measuring:
   - an ozone level of the indrawn flow; and/or
   - an ozone level of the filtered flow; and/or
   - humidity; and/or
   - undesired particles; and/or
   - volatile inorganic and/or organic compounds; and
- a controller operatively connected to the sensor, wherein the controller is configured to activate and/or deactivate the ozone scrubber in response to the generated signal.

An autonomous system is obtained by controlling the ozone scrubber and/or other filters with a controller using the generated signal from measuring the flow, preferably the air flow. These generated signals are determined with one or more sensors. The controller controls the climate system and may regulate the indrawn air flow and/or circulation of the flow in the structure for accommodation. Such an autonomous modular climate unit provides the advantage that it can be operated independently. Application of the sensor according to the invention provides an optimal operation of the modular climate unit in relation to the actual indrawn flow of preferably the air flow.

The sensor capable of generating a signal can measure the ozone level and/or humidity and/or undesired particles and/or volatile inorganic and/or organic compounds. Undesired particles are for example, but are not limited to: fine dust, soot, fungi, viruses, bacteria, (airborne) pollen, yeast, radioactive particles. Furthermore, inorganic and/or organic volatile compounds are for example, but not limited to: carbon monoxide, carbon dioxide, ozone, sulphur dioxide, nitrogen oxides, benzene, ethylene, cyanide.

Filters which can be used to filter the air flow are for example, but not limited to, ozone scrubber, plasma filter, carbon filter, zeolite, membrane, electrostatic discharge, particle filter, combustion, use of catalysts, dehumidifiers. The particle filter filters typically particles between 0.001 µm - 25 µm.

The one or more sensors can be provided in combination with the housing of the modular climate unit. For example, the sensor can be attached to a grid of finishing/covering element or rosette. Also, one or more of the sensors can be provided in the structure for accommodation provided with the modular climate unit according to the invention. This provides further information to the controller. The sensors may transmit and/or receive information to and/or from the controller with a wireless and/or wired protocol. This enables automatic climate control.

The modular climate unit has therefore the effect of being multi functional. The advantage is that the modular climate unit can be applied in diverse circumstances.

In a further preferred embodiment according to the present invention the ozone scrubber of the modular climate unit is used in combination with a further carbon filter, preferably wherein the carbon filter is a regenerative carbon filter.

Providing a carbon filter achieves that excess ozone is captured and therefore the ozone level may be reduced below 50 ppb.

To increase the lifespan of the carbon filter a regenerative carbon filter may be used. To achieve the increase in lifespan, the carbon filter can be combined with an electrostatic filter. Applying an electric field over the carbon filter, the carbon filter will regenerate itself. This renders the modular climate unit according to the invention very effective. As a result, less maintenance needs to be performed and operation costs will be lowered compared to non-regenerative carbon filters.

In a further preferred embodiment according to the present invention the carbon filter is detachably connected to the filter housing.

The effect of the carbon filter which is detachably connected to the filter housing is that it can be removed from the modular climate unit and replaced by another filter. The advantage is that the modular climate unit is dedicated to the environment the modular climate unit has to work in. Furthermore, maintenance will be easier to be performed and therefore operating costs will be lower.

Conventional climate units have a varying performance and are usually configured to circulate fresh air from the outside. Air from the outside usually contains undesired compounds, for example but not limited to: ozone, pollen, dust, viruses, bacteria, fungi, radioactive compounds, undesired particles, undesired humidity levels, carbon monoxide, carbon dioxide, sulphur dioxide and nitrogen oxides. In addition to ozone levels that are too high, an indoor environment may also be confronted with too high concentrations of one or more of these other undesired compounds.

In a further preferred embodiment according to the present invention, the modular climate unit wherein the ozone scrubber is additionally configured for filtering water and/or undesired particles and/or volatile organic compounds from the indrawn flow and/or the modular climate unit comprises a modular filter connection element configured for holding a number of separate filters.

Providing the modular climate unit with multiple filters results in the opportunity to filter for different undesired compounds. The advantage is that one modular climate unit can provide the structure for accommodation with a fresh flow, preferably a fresh air flow.

Providing the housing with different filters increases the efficiency of the modular climate unit adjustable to specific circumstances, for example, but not limited to, buildings near traffic roads, goat farms, hospitals, waiting areas at airports. In a presently preferred embodiment, the design and more specifically the filter design is done in relation to the specific circumstances of the structure and its environment. This enables providing an effective and dedicated modular climate unit.

In an embodiment according to the invention, the filter housing may comprise a modular connection element configured for modular providing and/or removing one or more filters.

The effect of a modular climate unit comprising a modular connection element configured for modular providing and/or removing one or more filters is the opportunity to connect different filters within the housing. The advantage of such a system is the increase in efficiency and easier performance of maintenance as well as adapting the modular climate unit to the need of the customer.

An advantage of providing a modular connection element is that filters, especially filters provided as separate modules, can be even more easily exchanged for a different set of filters. This allows the filter unit to be modulated for different and/or variations in circumstances and/or events in a quick and efficient manner. Such a modular connection element for example allows the filter unit according to the invention to be used during calamities to filter (toxic and/or contaminated) air flows from and/or in a building.

In a preferred embodiment, the modular connection element of the modular climate unit is a quick-release element, such as an electronic mating connection, a USB-connection, a BUS connection or another suitable electric connection.

The modular connection element is preferably integrated in the modular climate unit housing, and preferably at a predetermined location, in order to (even more) easily exchange filter modules in the modular climate unit.

In a further preferred embodiment according to the invention each of the one or more filters form one or more separate modules in the modular climate unit, wherein each filter is provided to filter an aspect of the indrawn flow. For example, aspects which may be filtered are: ozone, pollen, dust, viruses, bacteria, fungi, radioactive compounds, undesired particles, undesired humidity levels, carbon monoxide, carbon dioxide, sulphur dioxide and nitrogen oxides.

Providing the modular climate unit with separate modules will result in a purpose driven modular climate unit. This means that the climate unit can be adapted to changing circumstances and/or relocation of the climate unit to another location having different environmental circumstances. More specifically, in an example, this means that the modular climate unit may for example be placed in a medical facility, in which the indrawn air needs to be purified from viruses and bacteria. To that end, a plasma filter module and an electrostatic filter module are installed in the modular climate unit housing. When after a given period of time the modular climate unit is relocated to an industrial site (such as a factory), the modular climate unit may be needed for filtering particles and volatile inorganic compounds. The modular filters may than easily be extracted from the housing and replaced by other, more suitable modular filters to perform the filtering function. Due to the use of separate modules, which comprise the filters, the modular climate unit is adaptable to a wide range of applications and locations. This can not be achieved with the traditional climate units having fixed filters applied in it.

The advantage of a modular climate unit according to the invention is the increase in efficiency and easier performance of maintenance as well as adapting the modular climate unit to the need of the customer.

A further advantage is the easy addition and/or removing of additional modules. Furthermore, separate modules allow the modular climate unit to use only certain modules to filter the flow, preferably filtering the air flow.

In a further preferred embodiment according to the invention the controller further comprises a user interface, preferably the user interface comprises a touch screen, tablet, computer, or mobile phone.

By providing a user interface an effective operation of the modular climate unit is achieved. The user interface can be wireless and/or wired. The user interface render the modular climate unit flexible and adjustable to the specific conditions in which the modular climate unit is used. Preferably, the user interface comprises a touch screen, tablet, mobile phone or other electronic device. By providing the user interface as a touch screen, tablet, mobile phone or similar electronic device, a user has easy access to the operating parameters of the modular climate unit. This enables the user to control and/or adjust the filtering operation in an effective manner. For example, a so-called app can be downloaded and/or installed to enable control via the electronic device of a specific modular climate unit. Furthermore, this enable remote access for installing a software update, maintenance and the like. Also, the system can optionally send a warning signal to the user and/or manufacturer and/or service operator thereby achieving an interactive modular climate unit.

In a further preferred embodiment according to the invention at-line measurements can be performed using for example using a mobile phone and/or mobile device fitted with a sensor.

The advantage of using a mobile phone and/or mobile device is that life measurements can be performed at each location of the user. This will result in a quick warning for the user and/or modular climate unit to then rapidly act and provide the user with filtered air.

In a further preferred embodiment according to the invention further comprises a notification system, preferably wherein the notification system includes sending an e-mail, sending notification to an app, and/or physical alarm.

The advantage of a notification system is that the user will be notified when measurements show inconsistencies and/or maintenance needs to be performed and/or an error occurs. This will result in earlier notice of unfiltered air flow and will help to prevent the structure for accommodation to be filled with unhealthy air.

It will be understood to the skilled person that the notification as a result of the measurements can be send to any further person and/or party for example, but not limited to, traffic control, council bodies, inhabitants.

In one of the preferred embodiments according to the invention a modular climate unit according to the invention is preferably applied in buildings and/or rooms, for example houses, wherein airflow is extracted at a flow rate in the range of about 0.1 - 1000 m³/hour.

The invention further relates to a building comprising a modular climate unit according to the invention for filtering a flow, preferably an air flow, including ozone.

The building according to the invention provides the same advantages and effects as described for the modular climate unit.

The invention further relates to a method for filtering a flow, such as an air flow, comprising the steps of:
- providing a modular climate unit and/or building in an embodiment according to the invention;
- drawing in a flow of ambient air through the suction opening;
- activating the at least one filter;
- filtering the flow; and
- providing the filtered flow to a structure for accommodation.

The method according to the invention provides the same advantages and effects as described for the modular climate unit.

In an embodiment of the method according to the invention, the method step of filtering the flow comprises the step of reducing harmful compounds concentration in the flow.

Preferably, the method step for the reduction of the harmful compounds concentration comprises at least the step for reduction of ozone concentration.

Preferably, the method further comprising the step of self-controlling in response to a data signal. This enables flexible operation of a modular climate unit and user friendly operation.

Preferably, the method further comprises the step of designing a modular climate unit dedicated to the specific circumstances. This enables operation of a modular climate unit and user friendly operation dedicated to specific circumstances.

Further advantages, features and details of the invention are elucidated on the basis of a preferred embodiment thereof, wherein reference is made to the accompanying drawings, in which:
- Figure 1 shows a house comprising a modular climate unit;
- Figure 2 shows a modular climate unit;
- Figure 3 shows a modular climate unit comprising different modules;
- Figure 4 shows a closed housing of the modular climate unit;
- Figure 5 shows a modular climate unit with supplies; and
- Figure 6 shows a diagram for operating the modular climate unit.

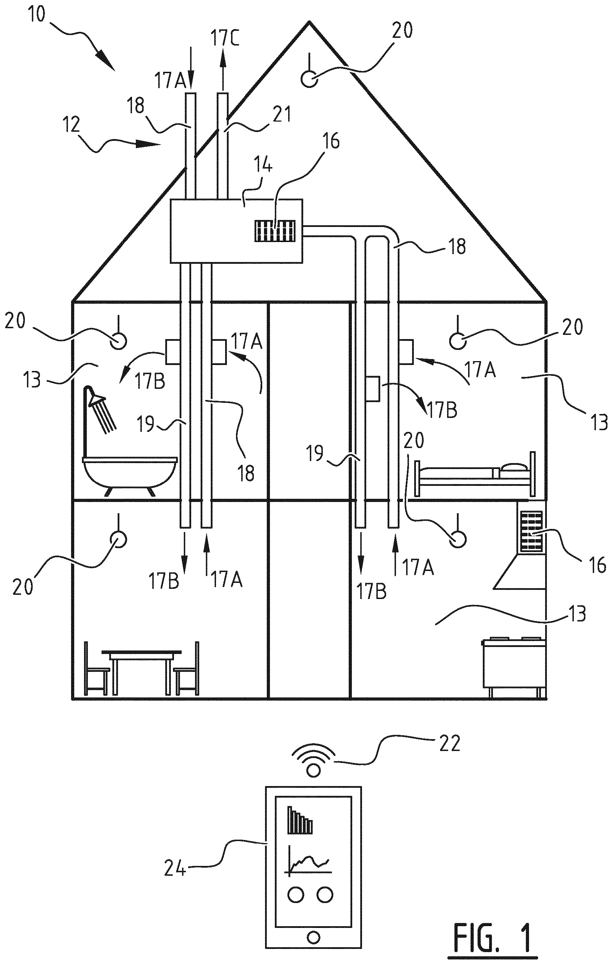

House 10 (figure 1) comprises modular climate unit 12 with a housing 14 holding different filters 16. Suction opening 18 provides housing 14 with airflow 17A which may require filtering. Airflow 17A can be an air flow drawn from the inside or the outside of the building. Filtered airflow 17B can be provided to the house by outlet opening 19. Measurements of, for example, the ozone level in room 13 can be analysed using sensor 20. Airflow 17C can be released from housing 14 by outlet 21. Controller 24 is operatively connected using signals 22 with sensor 20 and/or housing 14 and/or filters 16 and/or sensor in flow modular element.

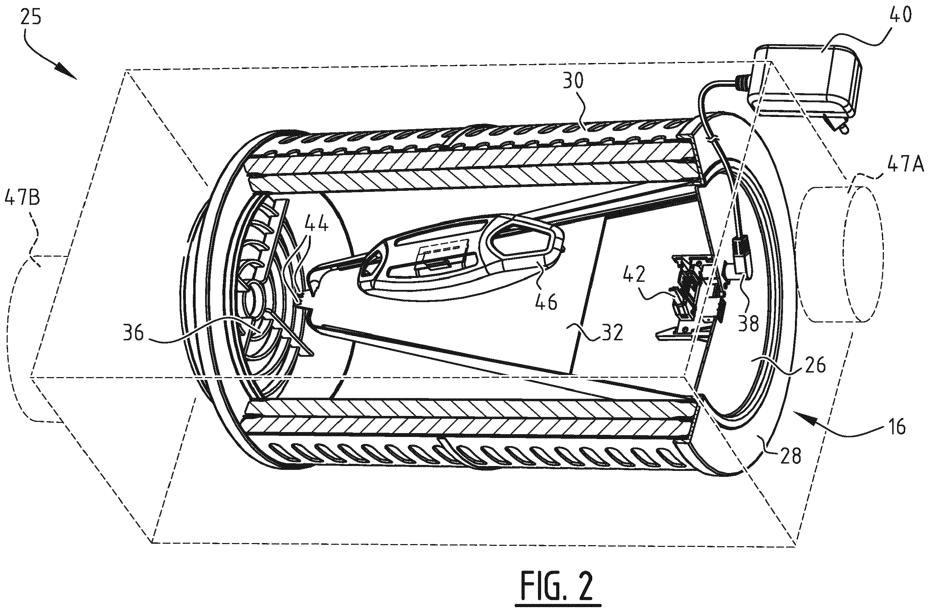

In an illustrated embodiment module 25 (figure 2) comprises filter 16 comprising cover 26, wall structure 28, outlet surface 30. Conical body 32 is provided with ribs 34. It will be understood that ribs 34 can be omitted from conical body 32 and can also be provided with other filter embodiments. Filter 16 is provided with inlet 36 to provide an airflow. Filter 16 is provided with a connection 38 for plug/adapter 40 which is connected to connector 42. Sensors 44 are connected with connection element 46. Module 25 is provided with connection elements 47A and 47B to connect module 25 to multiple modules and/or suction opening and/or outlet opening.

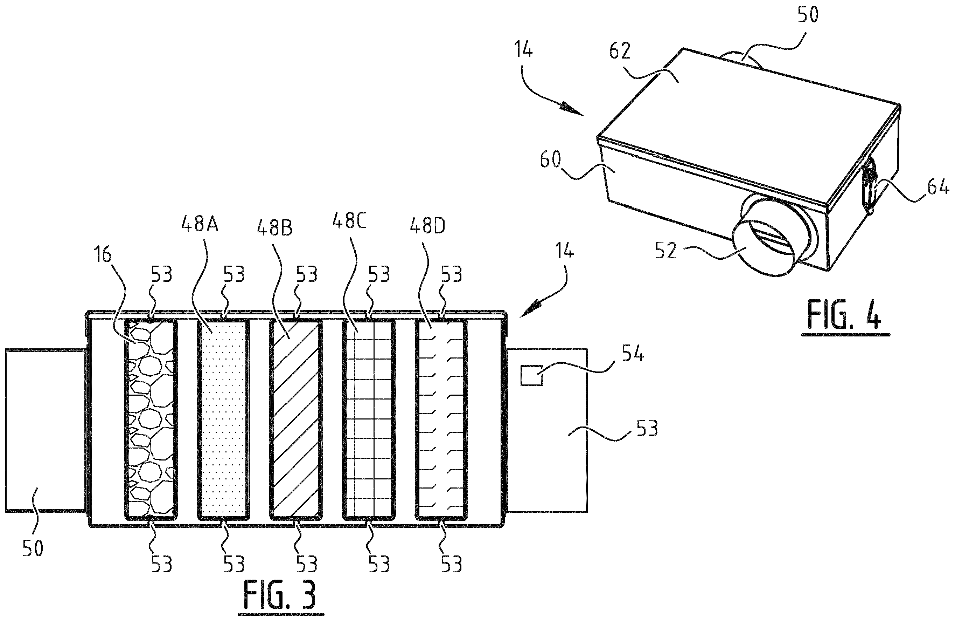

Housing 14 (figure 3) comprises filter 16, it will be understood that in this embodiment filter 16 is an ozone scrubber modular connection element. Furthermore, housing 14 further comprises multiple filters 48A, 48B, 48C, 48D hold in a modular connection element holder 49, a suction opening 50 and outlet opening 52. Filters 16, 48A, 48B, 48C, 48D are connected to modular connection element holder 49 using connection means 53A, 53B, 53 C, 53D. Connection means 53A, 53B, 53 C, 53D are for example, but not limited to: click mechanism, slide, hinge, pin. Furthermore, housing 14 comprises sensor 54.

In one of the embodiments the connection elements 47A and 47B are the same as connection means 53A, 53B, 53 C, 53D.

In one of the embodiments filters 16, 48A, 48B, 48C, 48D are positioned in series or parallel or a combination of series and parallel. It will be understood by the skilled person the number of filters is flexible and not limited to any number shown in one of the embodiments.

Housing 14 (figure 4) comprises first holding element 60 and second holding element 62. First element 60 and second element 62 are compatible with each other in such a way that they form a substantially sealed housing 14. First holding element 60 and second holding element 62 are hold together by holding means 64. Holding means 64 are for example, but not limited to: click mechanism, lock, hinge, guides. Housing 14 further comprises suction opening 50 and outlet opening 52.

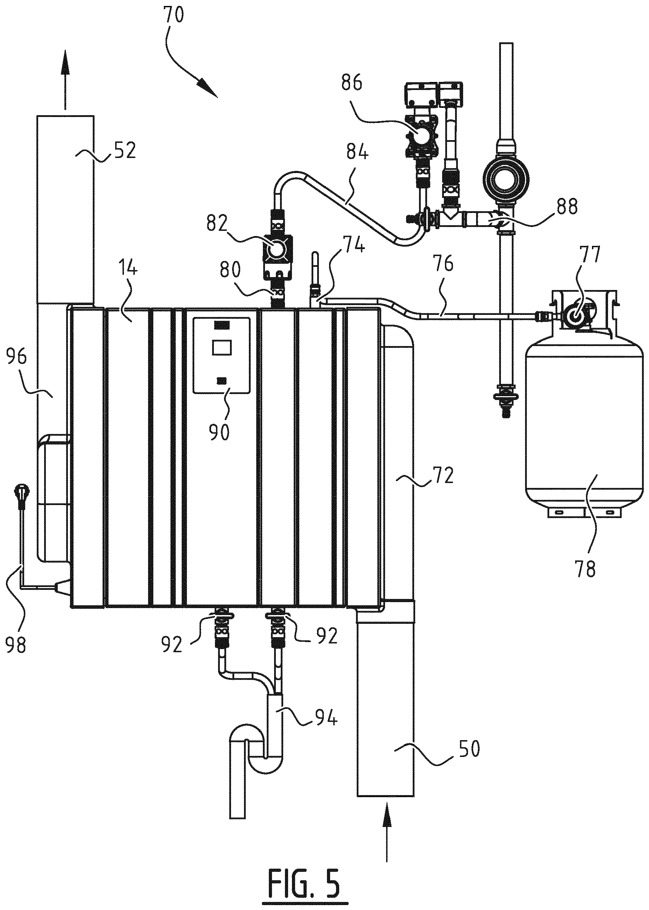

Modular climate unit 70 (figure 5) comprises suction opening 50 providing air to modular climate unit 70 using suction unit 72. Housing 14 is provided with inert gas 78 via pipe 76 and connector 74. The inert gas can be regulated by regulator 77. Housing 14 is also provided with water 88 via pipe 84 and connector 80. The influx of water 88 can be regulated by regulator 86 and tap 82. Furthermore, housing 14 is provided with drain 94. Draining housing 14 can be regulated by tap 92. Modular climate unit 70 comprises input and output display 90, in order to be able to change settings of the modular climate unit. Motor unit 96 provides an airflow into structure for accommodation via outlet opening 52. It will be understood display 90 can be connected to a stand alone device, for example, but not limited to: a smart phone, tablet, computer.

It will be understood modular climate unit 70 and modular climate unit 12 can be the same.

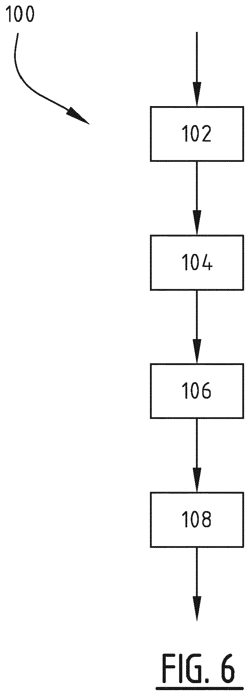

Flow path 100 (figure 6) shows a diagram for operating modular climate unit 12. It comprises the steps of waking up 102, being in operation 104, tuning 106 modular climate unit 12, going to sleep 108.

The provided method will be monitoring a structure for accommodation, the monitoring of the structure for accommodation will be performed by measuring the incoming airflow and if necessary filtering the airflow. The modular climate unit can be adapted to the circumstance it is used for as the modular climate unit is in a preferred embodiment according to the invention a modular system.

In operation the modular climate unit will draw in air from the outside and/or inside. Due to undesired compounds the indrawn flow may be filtered. Filtering of the indrawn flow occurs by at least one filter. The modular climate unit will respond to data provided by the at least one sensor. The air circulation results in a controlled, healthy and safe amount of undesired particles in the structure for accommodation. Optionally, the modular climate unit can send a warning message to the user and/or manufacturer and/or engineer and/or further party.

In some situations, the modular climate unit may be quickly adapted to specific circumstances or events, such as for example a disaster in which toxic and/or contaminated air is released. This adaptation would entail decoupling an existing filter module by taking it out of the housing and inserting another, different filter adapted to the substance to be filtered. In case an empty module location is available in the housing, the filter may also be inserted in the empty location to modify the modular climate unit to filter the toxic and/or contaminated air and purify it before it enters the building in which the climate unit is provided.

It will be understood by the skilled person the modular climate unit can also be configured to filter ozone but can also be configured as a modular climate unit filtering multiple undesired compounds from an indrawn air flow.

The present invention is by no means limited to the above described preferred embodiments thereof. The rights sought are defined by the following claims, within the scope of which many modifications can be envisaged.

## Claims

1. Modular climate unit for filtering a flow, preferably an air flow, comprising:
- a filter housing, comprising:
- a suction opening configured to accommodate an indrawn flow of ambient air for ventilation of a structure for accommodation; and
- an outlet opening for outlet of a filtered flow to the structure for accommodation,
wherein the filter housing comprises a flow path from the suction opening to the outlet opening for the indrawn flow, wherein the filter housing comprises at least two filter locations holding one or more filter modules; and
- at least one filter is chosen from the group of: a carbon filter, an ozone scrubber, a particle filter.

2. Modular climate unit according to claim 1, wherein the filter housing comprises at least one ozone scrubber, wherein the ozone scrubber is provided in the flow path and is configured for filtering ozone from the indrawn flow for ventilation of the structure for accommodation with a controlled ozone level.

3. Modular climate unit according to claim 1 or 2, further comprising:
- a sensor capable of generating a signal, wherein the sensor is configured for measuring:
- an ozone level of the indrawn flow; and/or
- an ozone level of the filtered flow; and/or
- humidity; and/or
- undesired particles; and/or
- volatile inorganic and/or organic compounds; and
- a controller operatively connected to the sensor, wherein the controller is configured to activate and/or deactivate the ozone scrubber in response to the generated signal.

4. Modular climate unit according to claim 1, 2 or 3, wherein the ozone scrubber comprises a carbon filter, preferably wherein the carbon filter is a regenerative carbon filter.

5. Modular climate unit according to claim 4, wherein the carbon filter is detachably connected to the filter housing.

6. Modular climate unit according to any one of the preceding claims, wherein the ozone scrubber is additionally configured for filtering water and/or undesired particles and/or volatile inorganic and/or organic compounds from the indrawn flow and/or the climate unit comprises a separate filter.

7. Modular climate unit according to any one of the preceding claims, wherein the filter housing comprises a modular connection element configured for modular providing and/or removing one or more filters.

8. Modular climate unit according to any one of the preceding claims, wherein each of the one or more filters form one or more separate modules in the climate unit, wherein each filter is provided to filter an aspect of the indrawn flow.

9. Modular climate unit according to any one of the preceding claims, wherein the controller further comprises a user interface.

10. Modular climate unit according to claim 9, wherein the user interface comprises a touch screen, tablet, computer, or mobile phone.

11. Modular climate unit according to any one of the preceding claims, further comprises a notification system, wherein the notification system preferably includes sending an e-mail and/or sending notification to an app and/or physical alarm.

12. Building comprising a modular climate unit according to any one of the preceding claims.

13. Method for filtering a flow, preferably an air flow, comprising the steps of:
- providing a modular climate unit and/or building according to any of the preceding claims;
- drawing in a flow of ambient air through the suction opening;
- activating the at least one filter;
- filtering the flow; and
- providing the filtered flow to a structure for accommodation.

14. Method according to claim 13, wherein filtering the flow comprises at least the reduction of ozone concentration.

15. Method according to claim 13 or 14, further comprising one or more of the steps of:
- self-controlling in response to a data signal; and
- designing a modular climate unit dedicated to the specific circumstances.
